# EUROPEAN PATENT APPLICATION

(11) **EP 3 737 137 A1**
(43) Date of publication of application: **11.11.2020**
(21) Application number: 19764816.5
(22) Date of filing: 08.03.2019
(51) Int. Cl.: H04W 16/14

(54) **SLOT FORMAT INDICATION METHOD, DEVICE AND SYSTEM**

(30) Priority: 09.03.2018 CN 201810195487
(71) Applicant: Huawei Technologies Co., Ltd., Longgang District Shenzhen, Guangdong 518129 (CN)
(72) Inventor: ZHANG, Lili, Shenzhen, Guangdong 518129 (CN); ZHANG, Xingwei, Shenzhen, Guangdong 518129 (CN)
(74) Representative: Thun, Clemens
(86) International application number: PCT/CN2019/077538
(87) International publication number: WO 2019/170151

(57) **Abstract**

Embodiments of this application disclose a slot format indication method, a device, and a system, to resolve an existing problem that a terminal cannot obtain an SFI of a terminal paired with the terminal. The method includes: obtaining, by first UE, first DCI that includes a first SFI and at least one second SFI, where the first SFI is an SFI of the first UE or an SFI of a group in which the first UE is, and the second SFI is an SFI of second UE paired with the first UE or an SFI of a group in which the second UE is; obtaining the first SFI and the at least one second SFI from the first DCI based on first indication information that is used to indicate a location of the first SFI in the first DCI and a location of the at least one second SFI in the first DCI; and determining, based on the first SFI and the at least one second SFI, to perform full-duplex communication.

## Description

This application claims priority to Chinese Patent Application No. 201810195487.1, filed with the Chinese Patent Office on March 9, 2018 and entitled "SLOT FORMAT INDICATION METHOD, DEVICE, AND SYSTEM", which is incorporated herein by reference in its entirety.

### TECHNICAL FIELD

Embodiments of this application relate to the field of communications technologies, and in particular, to a slot format indication method, a device, and a system.

### BACKGROUND

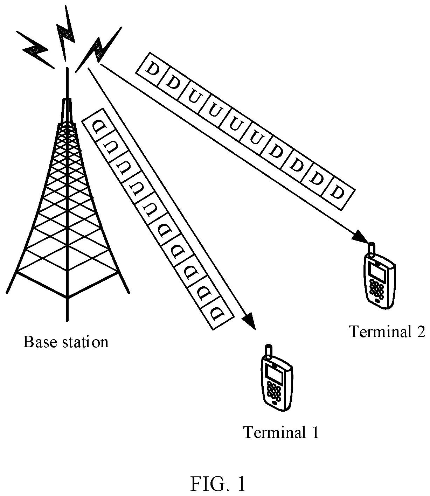

A next-generation radio (Next Radio, NR) system supports semi-static and dynamic slot format configuration. The dynamic slot format configuration may mean that a terminal is notified of a slot format (slot format) or slot formats of one or several slots (slot) within a period by using downlink control information (Downlink Control Information, DC) signaling. The DCI signaling may be referred to as a slot format indication (Slot Format Indication, SFI). In other words, a base station may indicate a slot format for a terminal dynamically by using an SFI. For example, as shown in FIG. 1, a base station may indicate to a terminal 1 by using an SFI 1 that formats of a slot 0 to a slot 9 are DDDDDUUUUD sequentially, and may indicate to a terminal by using an SFI 2 that formats of a slot 0 to a slot 9 are DDUUUUDDDD sequentially, where D represents downlink transmission and U represents uplink transmission.

However, the NR system may currently support a plurality of duplex manners for uplink and downlink data transmission such as full duplex, time division duplex, and frequency division duplex. Full duplex means that a communications device performs uplink and downlink transmission in a same slot (or symbol) by using a same frequency band. When a duplex manner for uplink and downlink data transmission supported by the NR system is full duplex, a terminal not only needs to learn of an SFI of the terminal but also needs to determine, based on an SFI of a terminal paired with the terminal, that the current duplex manner for uplink and downlink data transmission is the full-duplex manner. In this case, if the foregoing manner in which slot formats of different terminals are dynamically indicated by using different SFIs is used, the terminal can learn of only the SFI of the terminal, but cannot learn of an SFI of another terminal paired with the terminal, and further cannot determine that the current duplex manner for uplink and downlink data transmission is the full-duplex manner.

### SUMMARY

Embodiments of this application provide a slot format indication method, a device, and a system, so as to resolve an existing problem that a terminal cannot obtain an SFI of a terminal paired with the terminal.

To achieve the foregoing objective, the following technical solutions are used in the embodiments of this application.

According to a first aspect, an embodiment of this application provides a slot format indication method. The method includes: obtaining, by a first terminal (User Equipment, UE), first DCI that includes a first SFI and at least one second SFI, where the first SFI is an SFI of the first UE or an SFI of a group in which the first UE is, and the second SFI is an SFI of second UE paired with the first UE or an SFI of a group in which the second UE is; obtaining the first SFI and the at least one second SFI from the first DCI based on first indication information that is used to indicate a location of the first SFI in the first DCI and a location of the at least one second SFI in the first DCI; and determining, based on the first SFI and the at least one second SFI, to perform full-duplex communication, where that the first UE is paired with the second UE may mean that the first UE and the second UE work together to implement full-duplex communication in some slots. According to the implementation solution, an SFI of a terminal (or a group in which the terminal is) and an SFI of a terminal paired with the terminal (or a group in which the paired terminal is) are carried in same DCI; on a terminal side, the terminal may obtain, based on indication information that is used to indicate a location of the SFI of the terminal (or the group in which the terminal is) in the DCI and a location of the SFI of the paired terminal (or the group in which the paired terminal is) in the DCI, the SFI of the terminal (or the group in which the terminal is) and the SFI of the paired terminal (or the group in which the paired terminal is) from the DCI that includes the SFI of the terminal (or the group in which the terminal is) and the SFI of the paired terminal (or the group in which the paired terminal is), and determine, based on the obtained SFIs, to perform full-duplex communication, and perform a corresponding communication operation. In this way, the terminal can learn of not only the SFI of the terminal but also the SFI of the paired terminal that performs a full-duplex operation with the terminal, and determine, based on the obtained SFIs, to perform the full-duplex operation, thereby resolving an existing problem that an SFI of a paired terminal cannot be learned of.

In a first possible design of the first aspect, with reference to the first aspect, the first indication information includes a correspondence between UE and a location of an SFI of the UE in the first DCI, or a correspondence between a group in which UE is and a location of an SFI of the group in which the UE is in the first DCI. In this way, the first terminal can obtain, according to the correspondence, the SFI of the first terminal and the SFI of the terminal paired with the first terminal from the first DCI.

In a second possible design of the first aspect, with reference to the first aspect or the first possible design of the first aspect, SFIs in the first DCI are arranged in descending or ascending order of numbers of groups in which UEs corresponding to the SFIs are, or are arranged in the first DCI in a specific sequential pattern. This is not limited. In this way, flexibility in placing SFIs in DCI is improved.

In a third possible design of the first aspect, with reference to the first aspect, the first indication information includes a first correspondence and a second correspondence; and the first correspondence is a correspondence between the first UE or the group in which the first UE is and the location of the first SFI in the first DCI. In this way, the first UE may obtain the first SFI from the first DCI according to the first correspondence, and then obtain the second SFI from the first DCI according to the second correspondence.

In a fourth possible design of the first aspect, with reference to the third possible design of the first aspect, the second correspondence is predefined position matching in a specific pattern, and may be parity position matching, for example, a correspondence between the location of the first SFI in the first DCI and the location of the at least one second SFI in the first DCI, or a correspondence between the first UE and the location of the at least one second SFI in the first DCI, or may be position matching in a specific sequential pattern. This is not limited. In this way, a location of a second SFI can be derived based on the position matching relationship and the location of the first SFI, or can be derived based on the first UE or the group in which the first UE is.

In a fifth possible design of the first aspect, with reference to the first aspect, an SFI included in the first DCI is carried in an SFI field in the first DCI correspondingly, and the SFI field further carries an identifier of UE corresponding to the SFI or an identifier of a group in which the UE corresponding to the SFI is, that is, both the SFI of the UE (or the group in which the UE is) and the identifier of the UE (or the group in which the UE is) are carried in the first DCI; and when the SFI field carries the identifier of the UE corresponding to the SFI, the first indication information includes an identifier of the first UE and an identifier of the second UE, or when the SFI field carries the identifier of the group in which the UE corresponding to the SFI is, the first indication information includes an identifier of the group in which the first UE is and an identifier of the group in which the second UE is. In this way, the first UE can obtain the first SFI and the second SFI from the first DCI based on the identifier of the first UE and the identifier of the second UE, and can further obtain the first SFI and the second SFI from the first DCI based on the identifier of the group in which the first UE is and the identifier of the group in which the second UE is. This is not limited.

In a sixth possible design of the first aspect, with reference to the first aspect, the first DCI includes only the first SFI and the at least one second SFI, that is, includes only SFIs of paired UEs (or groups in which the UEs are), and does not include an SFI of another UE irrelevant to the UEs, and the first indication information includes a correspondence between the first UE or the group in which the first UE is and the location of the first SFI in the first DCI. In this way, the first UE can obtain the first SFI according to the correspondence, and use another SFI other than the first SFI in the first DCI as the at least one second SFI.

In a seventh possible design of the first aspect, with reference to the first aspect, when SFIs in the first DCI are arranged in descending or ascending order of numbers of groups in which UEs corresponding to the SFIs are, the first indication information includes a number of a group in which UE corresponding to a start SFI in the first DCI is, and an arrangement indication used to indicate an arrangement rule of the SFIs in the first DCI. In this way, the first UE obtains the first SFI and the at least one second SFI from the first DCI based on the arrangement indication and the number of the group in which the UE corresponding to the start SFI in the first DCI is.

According to a second aspect, an embodiment of this application further provides a slot format indication method. The method includes: obtaining, by first UE, first DCI including a first SFI, where the first SFI is an SFI of the first UE or an SFI of a group in which the first UE is, and the first SFI is used to indicate a slot format of a full-duplex transmission resource; obtaining the first SFI from the first DCI based on first indication information that is used to indicate a location of the first SFI in the first DCI; and determining, by the first UE based on the first SFI, to perform full-duplex communication. According to the implementation solution, an SFI that indicates a slot format of a terminal (or a group in which the terminal is) and indicates a slot format of full-duplex communication is carried in DCI, that is, the SFI may indicate not only the slot format of the terminal or the slot format of the group in which the terminal is but also slots that are used for full-duplex transmission; on a terminal side, the terminal obtains the SFI from the DCI based on indication information that is used to indicate a location of the SFI in the DCI, and may determine, based on the obtained SFI, to perform full-duplex communication, and perform a corresponding communication operation. In this way, the terminal can learn of not only the SFI of the terminal but also the slots that are used for full-duplex transmission and that are indicated by the SFI, and determine to perform a full-duplex operation, thereby resolving an existing problem that full-duplex transmission cannot be determined because an SFI of a paired terminal cannot be learned of.

In a possible design, with reference to the second aspect, the first indication information includes a correspondence between the first UE or the group in which the first UE is and the location of the first SFI in the first DCI, where in this case, the first UE can obtain the first SFI from the first DCI according to the correspondence, and determine, based on the first SFI, to perform full-duplex communication; or the first SFI is carried in an SFI field in the first DCI, and the SFI field further carries an identifier of the first UE or an identifier of the group in which the first UE is; and the first indication information includes the identifier of the first UE or the identifier of the group in which the first UE is, where in this case, the first UE can obtain the first SFI from the first DCI based on the identifier of the first UE or the identifier of the group in which the first UE is, and determine, based on the first SFI, to perform full-duplex communication.

According to a third aspect, an embodiment of this application further provides a slot format indication method. The method includes: obtaining, by first UE, first DCI including a first SFI and second DCI including a second SFI, where the first SFI is an SFI of the first UE or an SFI of a group in which the first UE is, and the second SFI is an SFI of second UE paired with the first UE or an SFI of a group in which the second UE is; obtaining the first SFI from the first DCI based on first indication information that includes a first RNTI and a second RNTI, where the first RNTI is used to descramble the first SFI that is required by the first UE or the group in which the first UE is, and the second RNTI is used to descramble the second SFI that is required by the second UE or the group in which the second UE is; and determining, based on the first SFI and the second SFI, to perform full-duplex communication. According to the implementation solution, SFIs indicating slot formats of different terminals (or groups in which the terminals are) are carried in different pieces of DCI; on a terminal side, a terminal obtains an SFI of the terminal from DCI of the terminal based on indication information that is used to indicate a location of the SFI in the DCI, obtains an SFI of a terminal paired with the terminal from DCI of the paired terminal, and determines, based on the obtained SFIs, to perform full-duplex communication, and performs a corresponding communication operation. In this way, the terminal can learn of not only the SFI of the terminal but also the SFI of the paired terminal, and determine to perform a full-duplex operation, thereby resolving an existing problem that full-duplex transmission cannot be determined because an SFI of a paired terminal cannot be learned of.

In a possible design, with reference to the third aspect, different pieces of DCI are scrambled by using different radio network temporary identifiers (Radio Network Tempory Identity, RNTI). For example, the first DCI is scrambled by using the first RNTI, and the second DCI is scrambled by using the second RNTI. After descrambling the first DCI by using the first RNTI, the first UE obtains the first SFI based on the first indication information. After descrambling the second DCI by using the second RNTI, the first UE obtains the first SFI based on the first indication information.

In still another possible design, with reference to the first aspect, the second aspect, the third aspect, or any one of the foregoing possible designs, DCI is scrambled by using a radio network temporary identifier; and the first UE parses, by using a radio network temporary identifier of the first UE, at least one piece of DCI delivered by an access network device, and uses successfully parsed DCI as the first DCI. In this way, reliability in DCI delivery is improved.

In still another possible design, with reference to the first aspect, the second aspect, the third aspect, or any one of the foregoing possible designs, an SFI included in DCI (the first DCI or any other DCI) corresponds to not only UE (or a group in which the UE is) but also a carrier on which the UE is or a carrier used by the group in which the UE is.

In still another possible design, with reference to the first aspect, the second aspect, the third aspect, or any one of the foregoing possible designs, the first indication information is delivered to the first UE by an access network device. For example, the first indication information is carried in any one of radio resource control signaling, media access control layer signaling, or physical layer signaling, and delivered to the first UE; the first indication information is pre-configured on the first UE; or a part of the first indication information is delivered to the first UE by using any one of radio resource control signaling, media access control layer signaling, or physical layer signaling, and a part of the first indication information is pre-configured on the first UE. This is not limited.

According to a fourth aspect, an embodiment of this application provides first UE. The first UE may implement a function performed by the first UE in the foregoing aspects or the foregoing possible designs, where the function may be implemented by hardware, or may be implemented by executing corresponding software by hardware, and the hardware or software includes one or more modules corresponding to the foregoing function. For example, the first UE may include an obtaining unit and a determining unit.

In a possible design, the obtaining unit is configured to: obtain first DCI that includes a first SFI and at least one second SFI, where the first SFI is an SFI of the first UE or an SFI of a group in which the first UE is, and the second SFI is an SFI of second UE paired with the first UE or an SFI of a group in which the second UE is; and obtain the first SFI and the at least one second SFI from the first DCI based on first indication information that is used to indicate a location of the first SFI in the first DCI and a location of the at least one second SFI in the first DCI; and the determining unit is configured to determine, based on the first SFI and the at least one second SFI that are obtained by the obtaining unit, to perform full-duplex communication.

In still another possible design, the first DCI obtained by the obtaining unit may include only the first SFI, where the first SFI is the SFI of the first UE or the SFI of the group in which the first UE is, and the first SFI is used to indicate a slot format of a full-duplex transmission resource; and the first indication information may be used to indicate only the location of the first SFI in the first DCI, and the determining unit 51 obtains the first SFI from the first DCI based on the first indication information, and the determining unit can determine, based on the first SFI, to perform full-duplex communication.

In yet another possible design, the first SFI is included in DCI 1, the second SFI is included in another piece of DCI (for example, DCI 2), the DCI 1 is scrambled by using an RNTI 1, the DCI 2 is scrambled by using an RNTI 2, and the first indication information includes the RNTI 1 and the RNTI 2, where the RNTI 1 is used to descramble the first SFI that is required by the first UE or the group in which the first UE is, and the RNTI 2 is used to descramble the second SFI that is required by the second UE or the group in which the second UE is. The obtaining unit is configured to: descramble, based on the RNTI 1, the DCI 1 that includes the first SFI, and obtain the first SFI from the DCI 1, and descramble, based on the RNTI 2, the DCI 2 that includes the second SFI, and obtain the second SFI from the DCI 2; and the determining unit is configured to determine, based on the first SFI and the second SFI, to perform full-duplex communication.

For a specific implementation of the first UE, refer to a behavioral function of the first UE in the slot format indication method provided in any one of the first aspect, the second aspect, the third aspect, or the possible designs of the foregoing aspects, and details are not described herein again. Therefore, the provided first UE can achieve same beneficial effects as any one of the first aspect or the possible designs of the first aspect.

According to a fifth aspect, first UE is provided, including a processor and a memory, where the memory is configured to store a computer executable instruction, and when the first UE runs, the processor executes the computer executable instruction stored in the memory, so that the first UE performs the slot format indication method according to any one of the first aspect or the possible designs of the first aspect.

According to a sixth aspect, a computer readable storage medium is provided, where the computer readable storage medium stores an instruction, and when the instruction runs on a computer, the computer is enabled to perform the slot format indication method according to any one of the first aspect, the second aspect, the third aspect, or the possible designs of the foregoing aspects.

According to a seventh aspect, a computer program product including an instruction is provided, where when the computer program product runs on a computer, the computer is enabled to perform the slot format indication method according to any one of the first aspect, the second aspect, the third aspect, or the possible designs of the foregoing aspects.

According to an eighth aspect, a chip system is provided. The chip system includes a processor and a communications interface, and is configured to support first UE in implementing functions in the foregoing aspects, for example, support the processor in obtaining, through the communications interface, first DCI that includes a first SFI and at least one second SFI; in obtaining the first SFI and the at least one second SFI from the first DCI based on first indication information that is used to indicate a location of the first SFI in the first DCI and a location of the at least one second SFI in the first DCI; and in determining, based on the obtained first SFI and at least one second SFI, to perform full-duplex communication. In a possible design, the chip system further includes a memory, where the memory is configured to store a program instruction and data that are necessary for the first UE. The chip system may include a chip, or may include a chip and another discrete device.

For technical effects brought by any design manner in the fourth aspect to the eighth aspect, refer to technical effects brought by any one of the first aspect, the second aspect, the third aspect, or the possible designs of the foregoing aspects, and details are not described herein again.

According to a ninth aspect, an embodiment of this application provides a slot format indication system, including the UE and the access network device according to any one of the fourth aspect to the eighth aspect.

These aspects or another aspect of this application are clearer and easier to understand in descriptions of the following embodiments.

### BRIEF DESCRIPTION OF DRAWINGS

FIG. 1 is a schematic diagram of an existing slot format indication;
FIG. 2 is an architectural diagram of a system according to an embodiment of this application;
FIG. 2a is a schematic diagram of a slot format;
FIG. 3 is a structural diagram of a terminal according to an embodiment of this application;
FIG. 4 is a flowchart of a slot format indication method according to an embodiment of this application;
FIG. 4a is a schematic diagram of a slot format indication according to an embodiment of this application;
FIG. 4b is a schematic diagram of still another slot format indication according to an embodiment of this application; and
FIG. 5 is a structural diagram of first UE according to an embodiment of this application.

### DESCRIPTION OF EMBODIMENTS

The following describes the implementations of the embodiments of this application in detail with reference to accompanying drawings.

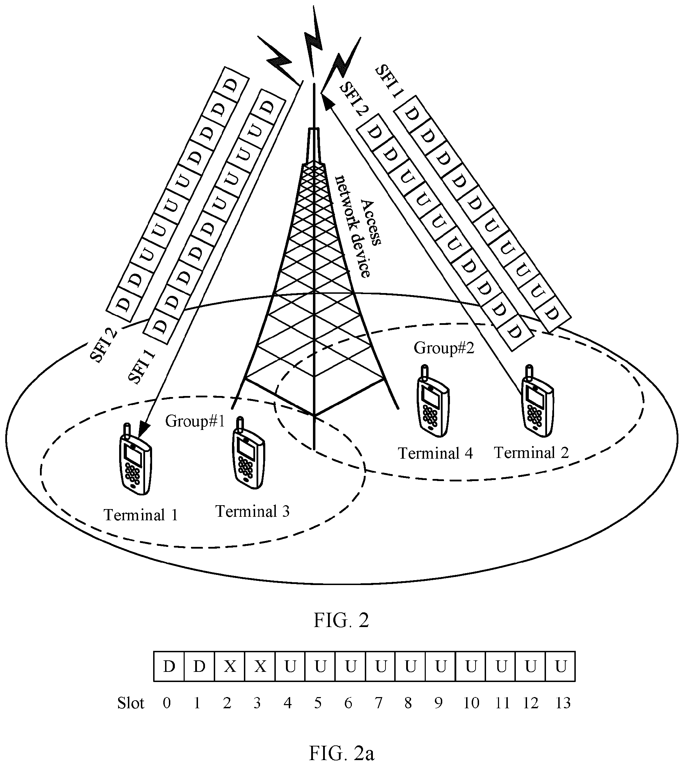

A slot format indication method provided in the embodiments of this application may be applied to a communications system shown in FIG. 2. The communications system may be an NR system (for example, a 5th generation (5th Generation, 5G) communications system), a long term evolution (Long Term Evolution, LTE) system, or another actual mobile communications system. This is not limited. As shown in FIG. 2, the communications system may include an access network device and a plurality of terminals. The access network device and the terminals may transmit data to each other in a duplex manner for uplink and downlink data transmission such as time division duplex, frequency division duplex, or full duplex. The access network device is deployed by an operator, and is mainly used to implement functions such as a radio physical control function, resource scheduling and radio resource management, radio access control, and mobility management. The access network device may be an access network (Access Network, AN)/radio access network (Radio Access Network, RAN) device, or a network device including a plurality of 5G-AN/5G-RAN nodes, or an access node such as a base station (NodeB, NB), a transmission point (Transmission Point, TRP), or an evolved NodeB (Evolution NodeB, eNB). The terminal may be used to connect to an access network device through a radio air interface, and then connect to a data network. The terminal may be user equipment (User Equipment, UE), for example, a mobile phone or a computer, or may be a cellular phone, a cordless phone, a session initiation protocol (Session Initiation Protocol, SIP) phone, a smartphone, a wireless local loop (Wireless Local Loop, WLL) station, a personal digital assistant (Personal Digital Assistant, PDA), a computer, a laptop computer, a handheld communications device, a handheld computing device, a satellite wireless device, a wireless modem card, a television set top box (set top box, STB), customer premises equipment (Customer Premise Equipment, CPE), and/or another device used to perform communication in a wireless system. It should be noted that FIG. 2 is merely an example of a framework diagram. A quantity of nodes included in FIG. 2 is not limited. In addition to functional nodes shown in FIG. 2, another node may be further included, for example, a core network device, a gateway device, or an application server. This is not limited.

In the system shown in FIG. 2, the access network device may group the plurality of terminals based on interference between the terminals, for example, add terminals with severe mutual interference to a same terminal group (referred to as a group for short), and add terminals with comparatively minor mutual interference to different groups as a matching pair. For example, as shown in FIG. 2, if there is comparatively minor interference between a terminal 1 and a terminal 2, there is comparatively minor interference between a terminal 3 and a terminal 4, there is comparatively severe interference between the terminal 1 and the terminal 3, and there is comparatively severe interference between the terminal 2 and the terminal 4, the terminal 1 and the terminal 3 are added to a same group #1, and the terminal 2 and the terminal 4 are added to a same group #2. Alternatively, the access network device may group the plurality of terminals based on traffic statuses of the terminals, for example, add a terminal, to a group GD with comparatively heavy downlink traffic, that is among the plurality of terminals and that needs to transmit downlink traffic, and add a terminal, to a group GU with comparatively heavy uplink traffic, that is among the plurality of terminals and that needs to transmit uplink traffic. Terminals in a same group may transmit data in a same transmission direction in a same time unit, and terminals in different groups may transmit data in different transmission directions in a same time unit. The time unit may be a slot (Slot), an orthogonal frequency division multiplexing (Orthogonal Frequency Division Multiplexing, OFDM) symbol, a subframe, a frame, or the like. The transmission direction may be an uplink data transmission direction (referred to as uplink transmission (U) for short) or a downlink data transmission direction (referred to as downlink transmission (D) for short). The uplink data transmission direction may be a data transmission direction from a terminal to an access network device, and the downlink data transmission direction may be a data transmission direction from an access network device to a terminal.

Specifically, the access network device may dynamically indicate, by using an SFI, a slot format that a terminal or a group in which the terminal is uses for transmitting data. As shown in FIG. 2a, one slot has 14 symbols (12 symbols for an extended cyclic prefix (Cyclic Prefix, CP)). A transmission status of each symbol is indicated by a predefined SFI format. For example, in FIG. 2a, a symbol 0 and a symbol 1 are downlink symbols, a symbol 2 and a symbol 3 are X symbols, and 10 symbols, from a symbol 4 to a symbol 13, are uplink symbols, where X represents a symbol status of an unknown part. There may be different combinations of symbol quantities for different SFIs, and a value of each symbol quantity may range from 0 to 13. In the NR system, several symbol status combinations of one slot are pre-defined. The system may use a sequence number of a combination to indicate a specific slot format. The access network device indicates slot formats of a plurality of slots by carrying an SFI in DCI. The DCI is carried on a GC-PDCCH channel. A terminal detects the GC-PDCCH at an interval, and receives the DCI that includes an SFI. This time period is referred to as a detection period (monitor period).

A same SFI is allocated to a group or terminals in a same group, and different SFIs are allocated to paired UEs or groups in which paired UEs are (or may be paired UE groups). For example, if the terminal 1 is paired with the terminal 2, an SFI 1 may be allocated to the terminal 1, and an SFI 2 may be allocated to the terminal 2, where the SFI 1 and the SFI 2 are different. A slot format may be used to indicate a transmission direction of a specific time unit or a transmission direction of a time unit and a frequency domain resource. The frequency domain resource may be a carrier (carrier), a bandwidth partial (Bandwidth Partial, BWP), a cell (cell), or the like. It should be noted that in this embodiment of this application, the solution provided in the embodiments of this application is described by using an example in which the time unit is a slot. For a format indication for a case in which the time unit is a symbol, a subframe, a frame, a combination of any of the foregoing time units (for example, a slot and a symbol), or the like, refer to the following solution, and details are not described again.

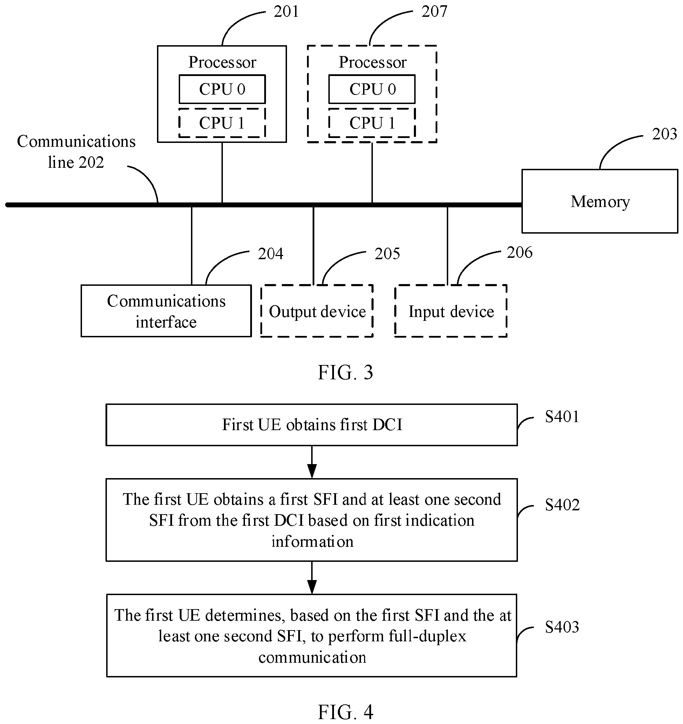

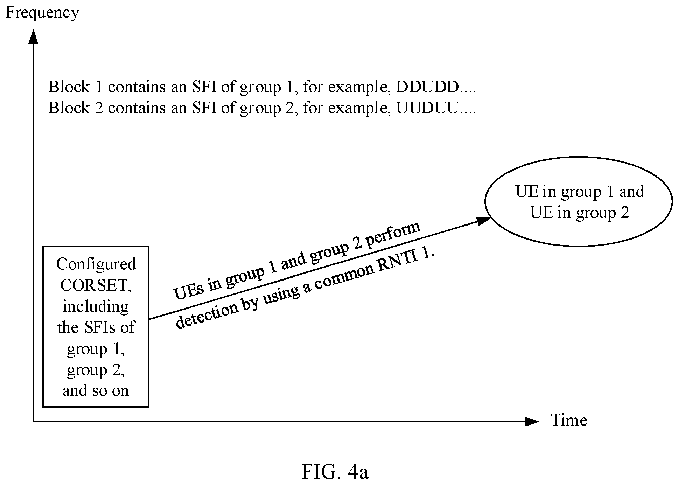

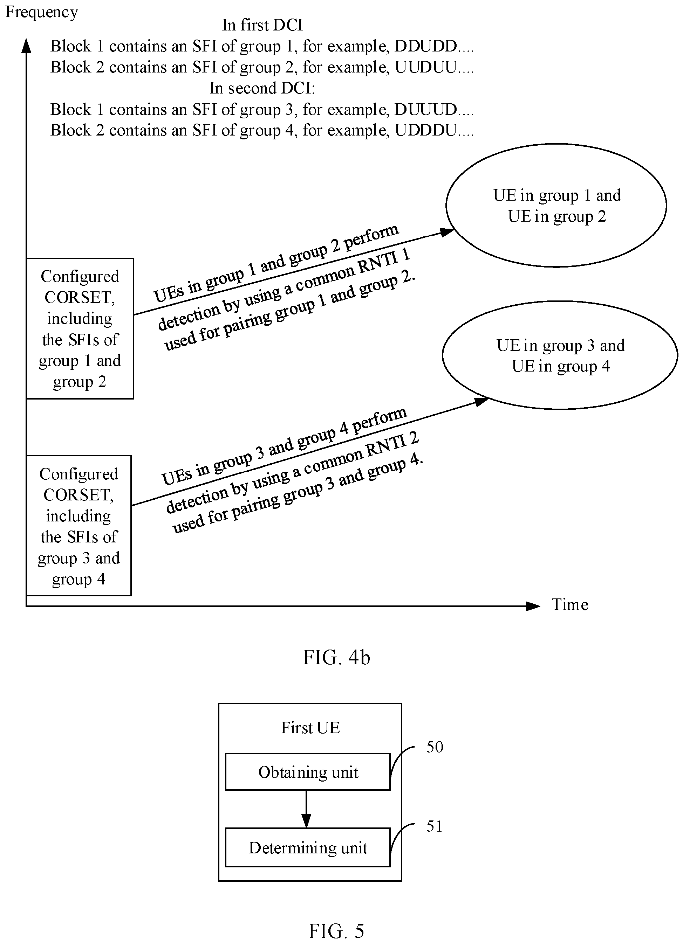

In a possible design, in a full-duplex communication manner, to enable a terminal to learn that a current duplex manner is the full-duplex manner and to perform a corresponding communication operation (for example, perform an operation such as power control or channel measurement in a time unit used for full-duplex transmission) based on the current duplex manner, the terminal may: obtain downlink control information (Downlink Control Information, DCI) that includes a first SFI and a second SFI; obtain the first SFI and the second SFI from the DCI based on indication information that is used to indicate locations of the first SFI and the second SFI; and determine, based on the first SFI and the second SFI, to perform full-duplex communication, where the first SFI may be an SFI of the terminal or an SFI of a group in which the terminal is, and the second SFI may be an SFI of a terminal paired with the terminal (referred to as a paired terminal for short) or an SFI of a group in which the paired terminal is. In this embodiment of this application, terminals with comparatively minor mutual interference are used as a matching pair, there may be one or more terminals that are paired with a terminal, and paired terminals may transmit data in different transmission directions. Specifically, for the possible design, refer to the following solution shown in FIG. 4.

For example, as shown in FIG. 2, the terminal 1 and the terminal 2 are paired with each other, and perform uplink and downlink transmission in slots 2, 3, 4, 6, 7, and 8 separately. In other words, both uplink and downlink transmission are performed in the slots 2, 3, 4, 6, 7, and 8. This is full-duplex transmission. To enable the terminal 1 to learn of slots that are used for full-duplex transmission, the access network device may send, to the terminal 1, DCI that includes an SFI 1 (formats of a slot 0 to a slot 9 are DDDDDUUUUD sequentially) and an SFI 2 (formats of a slot 0 to a slot 9 are DDUUUUDDDD sequentially), so that the terminal 1 compares the two SFIs, determines that the slots 2, 3, 4, 6, 7, and 8 are used for full-duplex transmission, and performs a corresponding communication operation. Likewise, to enable the terminal 2 to learn of slots that are used for full-duplex transmission, the access network device may also send, to the terminal 2, the DCI that includes the SFI 1 and the SFI 2, so that the terminal 2 compares the two SFIs, determines that the slots 2, 3, 4, 6, 7, and 8 are used for full-duplex transmission, and performs a corresponding communication operation.

To implement the technical solutions provided in the embodiments of this application, a terminal in FIG. 2 may include components shown in FIG. 3. As shown in FIG. 3, the terminal 200 includes at least one processor 201, a communications line 202, a memory 203, and at least one communications interface 204.

The processor 201 may be a central processing unit (Central Processing Unit, CPU) or an application-specific integrated circuit (Application Specific Integrated Circuit, ASIC), or may be configured as one or more integrated circuits implementing this embodiment of this application, for example, one or more microprocessors (Digital Signal Processor, DSP) or one or more field programmable gate arrays (Field Programmable Gate Array, FPGA).

The communications line 202 may include a path for transferring information between the foregoing components.

The communications interface 204 uses an apparatus such as any transceiver, and is configured to communicate with another device or a communications network, for example, an ethernet, a radio access network (Radio Access Network, RAN), or a wireless local area network (Wireless Local Area Networks, WLAN).

The memory 203 may be a read-only memory (Read-Only Memory, ROM) or another type of static storage device capable of storing static information and instructions, a random access memory (Random Access Memory, RAM) or another type of dynamic storage device capable of storing information and instructions, or may be an electrically erasable programmable read-only memory (Electrically Erasable Programmable Read-Only Memory, EEPROM), a compact disc read-only memory (Compact Disc Read-Only Memory, CD-ROM), or another compact disc storage or optical disc storage (including a compressed optical disc, a laser disc, an optical disc, a digital universal optical disc, a blue-ray optical disc, and the like), a magnetic disk storage medium or another magnetic storage device, or any other medium capable of carrying or storing expected program code in a form of instructions or data structures and capable of being accessed by a computer, but is not limited thereto. The memory may exist independently, and may be connected to the processor through the communications line 202. The memory may be alternatively integrated with the processor.

The memory 203 is configured to store a computer executable instruction that is used for executing the solutions in this application, and the execution is controlled by the processor 201. The processor 201 is configured to execute the computer executable instruction stored in the memory 203, to implement a slot format indication method provided in the following embodiments of this application. Optionally, the computer executable instruction in this embodiment of this application may also be referred to as application program code. This is not specifically limited in this embodiment of this application.

In specific implementation, in an embodiment, the processor 201 may include one or more CPUs, for example, a CPU 0 and a CPU 1 in FIG. 3. In specific implementation, in an embodiment, the terminal 200 may include a plurality of processors, for example, the processor 201 and a processor 207 in FIG. 3. Each of these processors may be a single-core processor, or may be a multi-CPU processor. The processor herein may be one or more devices, circuits, and/or processing cores configured to process data (for example, a computer program instruction).

In specific implementation, in an embodiment, the terminal 200 may further include an output device 205 and an input device 206. The output device 205 communicates with the processor 201, and may display information in a plurality of manners. For example, the output device 205 may be a liquid crystal display (Liquid Crystal Display, LCD), a light emitting diode (Light Emitting Diode, LED) display device, a cathode ray tube (Cathode Ray Tube, CRT) display device, a projector (Projector), or the like. The input device 206 communicates with the processor 201, and may receive a user input in a plurality of manners. For example, the input device 206 may be a mouse, a keyboard, a touchscreen device, a sensing device, or the like.

It should be noted that the terminal 200 may be a general-purpose device or a dedicated device. In specific implementation, the terminal 200 may be a desktop computer, a portable computer, a network server, a PDA, a mobile phone, a tablet computer, a wireless terminal, an embedded device, or a device with a structure similar to that in FIG. 3. A type of the terminal 200 is not limited in this embodiment of this application.

The following describes, with reference to the system shown in FIG. 2, a slot format indication method provided in this embodiment of this application. FIG. 4 is a flowchart of a slot format indication method according to an embodiment of this application. As shown in FIG. 4, the method may include S401 to S403.

S401: First UE obtains first DCI.

The first UE may be any terminal in FIG. 2.

The first DCI may include a first SFI and at least one second SFI, where the first SFI is an SFI of the first UE or an SFI of a group in which the first UE is, and the second SFI is an SFI of second UE paired with the first UE or an SFI of a group in which the second UE is. The first UE may work with any second UE to implement full-duplex transmission. It should be noted that the first DCI may include only the first SFI and the at least one second SFI, or may include but is not limited to the first SFI and the at least one second SFI. For example, the first DCI may further include an SFI of another terminal irrelevant to the first UE. This is not limited.

The first SFI may include only a slot format of a full-duplex transmission resource, or may include a slot format of a full-duplex transmission resource and a plurality of other slot formats, where the full-duplex transmission resource is at least one of an OFDM symbol or a slot. For example, assuming that full-duplex transmission is performed only in slots 2, 3, 4, 6, 7, and 8 among 10 slots from a slot 0 to a slot 9, the first SFI may include only slot formats of the slots 2, 3, 4, 6, 7, and 8, or may include slot formats of the slot 0 to the slot 9. This is not limited. Likewise, the second SFI may also include only a slot format of a full-duplex transmission resource, or may include a slot format of a full-duplex transmission resource and a plurality of other slot formats, and details are not described again.

Specifically, the first DCI may be carried on a group physical downlink control channel (Group common-Physical Downlink Control Channel, GC-PDCCH) together with a plurality of other pieces of DCI and delivered to a plurality of UEs including the first UE. The first UE may receive the GC-PDCCH within a detection period, parse at least one piece of DCI that is on the GC-PDCCH, and use successfully parsed DCI as the first DCI. Optionally, the first UE parses the at least one piece of DCI based on a radio network temporary identifier (Radio Network Tempory Identity, RNTI) of the first UE. The RNTI is pre-configured for the UE by a network device by using radio resource control (Radio Resource Control, RRC) signaling.

The detection period may be delivered to the first UE by an access network device. For example, the access network device may carry the detection period in any one of signaling such as RRC signaling, media access control (Media Access Control, MAC) layer signaling, and physical layer signaling, and deliver the detection period to the first UE. When the first DCI includes only the first SFI and the at least one second SFI, the detection period may be a detection period separately configured for the first UE. In this case, detection periods configured for different UEs may be different. When the first DCI includes the first SFI, the at least one second SFI, and an SFI of another UE irrelevant to the first UE, the detection period may still be a current re-configured SFI detection period in an NR system. This is not limited.

S402: The first UE obtains the first SFI and the at least one second SFI from the first DCI based on first indication information.

The first indication information may be used to indicate a location of the first SFI in the first DCI and a location of the at least one second SFI in the first DCI. In this embodiment of this application, the location may be a bit field carrying an SFI, a control resource set (control resource set, CORSET) carrying an SFI, a control channel element (control channel element, CCE) carrying an SFI, or a resource element (resource element, RE) carrying an SFI. The first indication information may be delivered to the first UE by the access network device. For example, the access network device carries the first indication information in any one of signaling such as RRC signaling, MAC layer signaling, and physical layer signaling, and delivers the first indication information to the first UE; the first indication information may be pre-configured on the first UE; or a part of the first indication information is pre-configured, and a remaining part of the first indication information is carried in any one of signaling such as RRC signaling, MAC layer signaling, and physical layer signaling, and delivered to the first UE. This is not limited.

In a possible design, the first indication information includes a correspondence between UE and a location of an SFI of the UE in the first DCI, or a correspondence between a group in which UE is and a location of an SFI of the group in which the UE is in the first DCI. In still another possible design, the first indication information includes a first correspondence and a second correspondence; and the first correspondence is a correspondence between the first UE or the group in which the first UE is and the location of the first SFI in the first DCI, and the second correspondence is a correspondence between the location of the first SFI in the first DCI and the location of the at least one second SFI in the first DCI, or a correspondence between the first UE and the location of the at least one second SFI in the first DCI. In yet another possible design, the first indication information includes an identifier of the first UE and an identifier of the second UE, or includes an identifier of the group in which the first UE is and an identifier of the group in which the second UE is. There may be one or more second UEs. When the first indication information includes different contents, execution processes of S402 are different. For details, refer to the following (1) to (5).

S403: The first UE determines, based on the first SFI and the at least one second SFI, to perform full-duplex communication.

Specifically, the first UE may compare slots indicated by the first SFI and the at least one second SFI. If the first SFI indicates that a first slot is used for downlink transmission, and the second SFI indicates that the first slot is used for uplink transmission, or if the first SFI indicates that a first slot is used for uplink transmission, and the second SFI indicates that the first slot is used for downlink transmission, the first UE determines to perform full-duplex communication in the first slot, where the first slot may be any slot indicated by the first SFI.

Further, after S403, the first UE may perform a corresponding communication operation, to meet a requirement of full-duplex communication. For example, the first UE may control, based on a power control parameter corresponding to full-duplex communication, power in a slot used for full-duplex communication, or perform full-duplex resource-specific channel measurement, or the like. Specifically, for the communication operation, refer to the prior art, and details are not described.

Compared with the prior art, in the solution shown in FIG. 4, a terminal may obtain, based on indication information that is used to indicate a location of an SFI of the terminal (or a group in which the terminal is) in DCI and a location of an SFI of a paired terminal (or a group in which the paired terminal is) in the DCI, the SFI of the terminal (or the group in which the terminal is) and the SFI of the paired terminal (or the group in which the paired terminal is) from the DCI that includes the SFI of the terminal (or the group in which the terminal is) and the SFI of the paired terminal (or the group in which the paired terminal is), and determine, based on the obtained SFIs, to perform full-duplex communication, and perform a corresponding communication operation. In this way, the terminal can learn of not only the SFI of the terminal but also the SFI of the paired terminal that performs a full-duplex operation with the terminal, and determine, based on the obtained SFIs, to perform the full-duplex operation, thereby resolving an existing problem that an SFI of a paired terminal cannot be learned of.

In the solution shown in FIG. 4, S402 may include any one of the following implementations (1) to (5).
(1) The first indication information includes a correspondence between UE and a location of an SFI of the UE in the first DCI, or a correspondence between a group in which UE is and a location of an SFI of the group in which the UE is in the first DCI, where the UE may be any UE in a network, and may be the first UE or the second UE.

The first UE obtains the first SFI and the at least one second SFI from the first DCI according to the correspondence between UE and a location of an SFI of the UE in the first DCI, or the correspondence between a group in which UE is and a location of an SFI of the group in which the UE is in the first DCI.

In a possible design, the correspondence may be stored in the first UE in a form of a list. For example, the first UE may search for a first location that is in the list and that corresponds to the first UE, use an SFI at the first location in the first DCI as the first SFI, search for a second location that is in the list and that corresponds to the second UE, and use an SFI at the second location in the first DCI as the second SFI. For example, Table 1 below shows a relationship between UE and a location of an SFI of the UE in DCI. An SFI of UE 1 is located at a position 1 in the DCI, and an SFI of UE 2 is located at a position 2 in the DCI. Assuming that the UE 1 and the UE 2 are paired, the UE 1 can find, according to Table 1, the position 1 corresponding to the UE 1 and the position 2 corresponding to the UE 2, and obtain the SFIs from the position 1 and the position 2 in the DCI. It should be noted that in this implementation, the access network device may notify the first UE of second UEs that are paired with the first UE. The notification may be sent by using at least one of RRC signaling, MAC signaling, or physical layer signaling.

**Table 1**

| | |
|---|---|
| UE | Location of an SFI in DCI |
| UE 1 | Position 1 |
| UE 2 | Position 2 |

In still another possible design, the correspondence may be alternatively represented by using a function relationship. For example, a function y=f(x) is used to represent the correspondence, where y is a location of an SFI in DCI, and a dependent variable x is an identifier of UE or an identifier of a group in which the UE is. The identifier of the UE may be used to identify the UE, and may be a number of the UE, an equipment serial number of the UE, or the like. The identifier of the group in which the UE is may be a number of the group in which the UE is, or the like. This is not limited. In the function relationship, based on the dependent variable x, one y may be uniquely obtained, or a plurality of y values may be obtained. The plurality of y values include not only a location of an SFI of UE (or a group in which the UE is) in DCI but also a location of an SFI of UE paired with the UE (or a group in which the paired UE is) in the DCI.

For example, it is assumed that UE 1 and UE 2 are paired terminals. When only one y value can be calculated according to y=f(x), a location of an SFI of the UE 1 in DCI can be obtained after an identifier of the UE 1 is input into the function relationship, and a location of an SFI of the UE 2 in the DCI can be obtained after an identifier of the UE 2 is input into the function relationship. When a plurality of y values can be calculated according to y=f(x), not only a location of an SFI of the UE 1 in DCI but also a location of an SFI of the UE 2 in the DCI can be obtained after an identifier of the UE 1 is input into the function relationship.

In this manner, SFIs in the first DCI may be arranged in descending or ascending order of numbers of groups in which UEs corresponding to the SFIs are, or may be arranged in the first DCI in a specific sequential pattern. This is not limited.

(2) When SFIs in the first DCI are arranged in descending or ascending order of numbers of groups in which UEs corresponding to the SFIs are, the first indication information includes a number of a group in which UE corresponding to a start SFI in the first DCI is, and an arrangement indication used to indicate an arrangement rule of the SFIs in the first DCI.

The first UE obtains the first SFI and the at least one second SFI from the first DCI based on the arrangement indication and the number of the group in which the UE corresponding to the start SFI in the first DCI is.

For example, it is assumed that UE 1 and UE 2 are paired terminals; SFIs in DCI are arranged in descending order of numbers of groups in which UEs corresponding to the SFIs are, for example, a DCI format of [DCI format identifier, an SFI of a group 5, an SFI of a group 4, an SFI of a group 3, an SFI of a group 2, an SFI of a group 1]; a number of a group in which the UE 1 is is 1; a number of a group in which the UE 2 is is 4; and a number of a group in which UE corresponding to a start SFI is is 5. The UE 1 can obtain an SFI of the UE 2 from the second location, and obtain an SFI from the fifth location.

(3) The first indication information includes a first correspondence and a second correspondence; and the first correspondence is a correspondence between the first UE or the group in which the first UE is and the location of the first SFI in the first DCI, and the second correspondence is a correspondence between the location of the first SFI in the first DCI and the location of the at least one second SFI in the first DCI, or a correspondence between the first UE and the location of the at least one second SFI in the first DCI.

The first UE obtains the first SFI from the first DCI according to the first correspondence, and obtains the at least one second SFI from the first DCI according to the second correspondence.

The second correspondence is predefined position matching in a specific pattern. In a possible design, the second correspondence is a correspondence between an odd-numbered position and an even-numbered position. For example, the first SFI is located in an odd-numbered position, and the at least one second SFI is located in an even-numbered position; or the first SFI is located in an even-numbered position, and the at least one second SFI is located in an odd-numbered position. This is not limited. The odd-numbered position and the even-numbered position may be odd-numbered and even-numbered positions that are in a correlation relationship or in a correspondence relationship.

For example, when there is only one second UE that is paired with the first UE, that is, the second SFI is an SFI of one second UE, if the first SFI is an SFI in an odd-numbered position in the first DCI, the second SFI is an SFI in a position that is in the first DCI and that is the odd-numbered position plus or minus 1; or if the first SFI is an SFI in an even-numbered position in the first DCI, the second SFI is an SFI in a position that is in the first DCI and that is the even-numbered position plus or minus 1; or if the first SFI is an SFI in an odd-numbered position in the first DCI, the second SFI is an SFI in a position that is in the first DCI and that is the odd-numbered position plus or minus 2; or if the first SFI is an SFI in an even-numbered position in the first DCI, the second SFI is an SFI in a position that is in the first DCI and that is the even-numbered position plus or minus 2. For another example, when the odd-numbered position and the even-numbered position may be odd-numbered and even-numbered positions that have a correspondence in between, if an SFI corresponding to UE 1 is located in a position 1 in DCI, a location of an SFI corresponding to UE 2 paired with the UE 1 in the DCI may be a position 2.

When there are a plurality of second UEs that are paired with the first UE, that is, there are a plurality of UEs that are paired with the first UE or a plurality of groups in which the UEs that are paired with the first UE are, the foregoing one-to-one positional relationship may be extended to a one-to-many positional relationship. For example, if UE or a group in which the UE is corresponds to an SFI in an odd-numbered position in the first correspondence, in the second correspondence, SFIs of UEs paired with the UE in DCI are an SFI in a position that is the odd-numbered position plus 1 and an SFI in a position that is the odd-numbered position minus 1. For example, if an SFI corresponding to UE 1 is located in a position 3 in the DCI, a location of an SFI corresponding to UE 2 paired with the UE 1 in the DCI may be a position 2, and a location of an SFI corresponding to UE 3 paired with the UE 1 in the DCI may be a position 4. The reverse is also applicable. To be specific, if UE or a group in which the UE is corresponds to an SFI in an even-numbered position in the first correspondence, in the second correspondence, SFIs of UEs paired with the UE in DCI are an SFI in a position that is the even-numbered position plus 1 and an SFI in a position that is the even-numbered position minus 1. For another example, if UE or a group in which the UE is corresponds to an SFI in an odd-numbered position in the first correspondence, in the second correspondence, SFIs of UEs paired with the UE in DCI are an SFI in a position that is the odd-numbered position plus 2 and an SFI in a position that is the odd-numbered position minus 2. The reverse is also applicable. To be specific, if UE or a group in which the UE is corresponds to an SFI in an even-numbered position in the first correspondence, in the second correspondence, SFIs of UEs paired with the UE in DCI are an SFI in a position that is the even-numbered position plus 2 and an SFI in a position that is the even-numbered position minus 2.

In still another possible design, the predefined position matching in the specific pattern may alternatively be position matching in a specific sequential pattern, and a location of a corresponding SFI can be derived based on an identifier of UE or an identifier of a group in which the UE is.

(4) An SFI included in the first DCI is carried in an SFI field in the first DCI correspondingly, and the SFI field further carries an identifier of UE corresponding to the SFI or an identifier of a group in which the UE corresponding to the SFI is.

When the SFI field carries the identifier of the UE corresponding to the SFI, the first indication information includes an identifier of the first UE and an identifier of the second UE. In this case, the first UE obtains the first SFI from the first DCI based on the identifier of the first UE, and obtains the second SFI from the first DCI based on the identifier of the second UE.

When the SFI field carries the identifier of the group in which the UE corresponding to the SFI is, the first indication information includes an identifier of the group in which the first UE is and an identifier of the group in which the second UE is. In this case, the first UE obtains the first SFI from the first DCI based on the identifier of the group in which the first UE is, and obtains the second SFI from the first DCI based on the identifier of the group in which the second UE is.

An identifier of a group may be used to identify the group, and may be a number of the group or the like.

For example, DCI includes (SFI of a group 1, identifier of the group 1), (SFI of a group 2, identifier of the group 2), ..., and (SFI of a group N, identifier of the group N). If a group in which UE 1 is is the group 1, the UE 1 may directly obtain the SFI of the group 1 from the DCI based on the identifier of the group 1.

(5) The first DCI includes only the first SFI and the at least one second SFI, that is, includes only SFIs of paired UEs (or groups in which the UEs are), and does not include an SFI of another UE irrelevant to the UEs, and the first indication information includes a correspondence between the first UE or the group in which the first UE is and the location of the first SFI in the first DCI. The first UE obtains the first SFI according to the correspondence, and uses another SFI other than the first SFI in the first DCI as the at least one second SFI.

The first DCI may be scrambled by using an RNTI, carried on a GC-PDCCH, and delivered. The first indication information may further include RNTIs used to descramble the first DCI that includes the first SFI and the at least one second SFI. The first UE may search for the GC-PDCCH, descramble the first DCI based on the RNTIs included in the first indication information, obtain the first SFI from the first DCI according to the correspondence between the first UE or the group in which the first UE is and the location of the first SFI in the first DCI, use another SFI in the first DCI as the second SFI, and perform full-duplex communication based on the first SFI and the second SFI.

Optionally, the first UE searches for the GC-PDCCH in type 3 PDCCH common search space (common search space, CCS). In this case, the first indication information may further include related CORSET (control resource set) indication information that needs to be searched for.

For example, the access network device places, in a piece of DCI, an SFI of one UE (or a group in which the UE is) and an SFI of UE paired with the UE (or a UE group paired with the group in which the UE is), separately places, in other pieces of DCI, SFIs of UEs that are irrelevant to the UE or UE in the group, delivers the pieces of DCI by using separate GC-PDCCHs, configures a plurality of corresponding CORSET resources, and delivers the CORSET resources by using RRC signaling. The UE or the UE in the group detects, based on an RNTI corresponding to the UE or the UE in the group, an SFI required by the UE or the UE in the group. The paired UE of the UE or a UE group paired with UE in the group detects, based on an RNTI corresponding to the paired UE of the UE or the UE group paired with UE in the group, an SFI required by the paired UE of the UE or the UE group paired with UE in the group. The RNTI is an RNTI corresponding to the paired UE or the paired group, for example, UE-map-RNTI or UE-group-map-RNTI (may also be referred to as group-map-RNTI). The UE-map-RNTI or the UE-group-map-RNTI is configured by a base station, and delivered by the base station by using RRC signaling. There are a plurality of UE-map-RNTIs or UE-group-map-RNTIs, which correspond to a plurality of paired UEs or paired groups. There are a plurality of GC-PDCCHs, which correspond to a plurality of pieces of DCI. CORSET resources corresponding to the pieces of DCI need to be configured by a base station, and delivered by the base station by using RRC signaling.

For example, UE 1 and UE 2 are paired, and a first SFI of the UE 1 and a second SFI of the UE 2 are included in one piece of DCI; UE 3 and UE 4 are paired, and a third SFI of the UE 3 and a fourth SFI of the UE 4 are included in another piece of DCI. Different pieces of DCI are scrambled by using different RNTIs. For the UE 1, the first indication information may further include an RNTI 1 used to descramble the DCI that includes the SFI of the UE 1 and the SFI of the UE paired with the UE 1, or an RNTI 1 used to descramble DCI that includes an SFI of a group in which the UE 1 is and an SFI of a group in which the UE paired with the UE 1 is. In this case, the UE 1 obtains, based on the RNTI 1 corresponding to the UE 1, the DCI including the SFI of the UE 1, obtains the first SFI according to the correspondence, uses another SFI as the second SFI, and performs full-duplex communication based on the first SFI and the second SFI. Likewise, for the UE 2, the first indication information may further include an RNTI 2 used to descramble the DCI that includes the SFI of the UE 2 and the SFI of the UE paired with the UE 2, or an RNTI 2 used to descramble DCI that includes an SFI of a group in which the UE 2 is and an SFI of a group in which the UE paired with the UE 2 is. In this case, the UE 2 obtains, based on the corresponding RNTI 2, the DCI including the SFI of the UE 2, obtains the second SFI according to the correspondence, uses another SFI as the first SFI, and performs full-duplex communication based on the first SFI and the second SFI. For example, as shown in FIG. 4a, DCI including an SFI of UE 1 in a group 1 and an SFI of UE 2 in a group 2 is carried in a CORSET. The UE 1 can descramble the SFI of the UE 1 and the SFI of the UE 2 based on an RNTI 1 and according to the correspondence.

Alternatively, a group 1 and a group 2 are used as paired groups, SFIs corresponding to the group 1 and the group 2 are placed in DCI 1, and the DCI 1 is carried on a GC-PDCCH 1 and delivered. UE in the group 1 demodulates the DCI 1 to obtain an SFI 1 that is required by the UE and that is in the DCI 1, and uses the SFI 1 as an SFI corresponding to the UE, or further obtains an SFI 2 that is required by the UE, that corresponds to UE paired with the UE or to a group in which UE paired with the UE is, and that is in the DCI 1, and uses the SFI 2 as a paired SFI. Likewise, UE in the group 2 demodulates the DCI 1 to obtain the SFI 2 that is required by the UE and that is in the DCI 1, and uses the SFI 2 as an SFI corresponding to the UE, or further obtains the SFI 1 that is required by the UE, that corresponds to UE paired with the UE or to a group in which UE paired with the UE is, and that is in the DCI 1, and uses the SFI 1 as a paired SFI. The UE in the group 1 and the UE in the group 2 perform determining based on the foregoing information, and perform a corresponding action. The UE in the group 1 or the UE in the group 2 demodulates the DCI 1 based on a UE-map-RNTI1 or a UE-group-map-RNTI1.

A group 3 and a group 4 are used as paired groups, SFIs corresponding to the group 3 and the group 4 are placed in DCI 2, and the DCI 2 is carried on a GC-PDCCH 2 and delivered. UE in the group 3 demodulates the DCI 2 to obtain an SFI 1 that is required by the UE and that is in the DCI 2, and uses the SFI 1 as an SFI corresponding to the UE, or further obtains an SFI 2 that is required by the UE, that corresponds to UE paired with the UE or to a group in which UE paired with the UE is, and that is in the DCI 2, and uses the SFI 2 as a paired SFI. Likewise, UE in the group 4 demodulates the DCI 2 to obtain an SFI 2 that is required by the UE and that is in the DCI 2, and uses the SFI 2 as an SFI corresponding to the UE, or further obtains an SFI 1 that is required by the UE, that corresponds to UE paired with the UE or to a group in which UE paired with the UE is, and that is in the DCI 2, and uses the SFI 1 as a paired SFI. The UE in the group 3 and the UE in the group 4 perform determining based on the foregoing information, and perform a corresponding action. The UE in the group 3 or the UE in the group 4 demodulates the DCI 2 based on a UE-map-RNTI2 or a UE-group-map-RNTI2.

For example, as shown in FIG. 4b, first DCI including an SFI of UE in a group 1 and an SFI of UE in a group 2 is carried in a specific CORSET, and second DCI including an SFI of UE in a group 3 and an SFI of UE in a group 4 is carried in another CORSET. The UE in the group 1 or the UE in the group 2 descrambles the SFI of the UE in the group 1 and the SFI of the UE in the group 2 based on an RNTI 1, and the UE in the group 3 or the UE in the group 4 descrambles the SFI of the UE in the group 3 and the SFI of the UE in the group 4 based on an RNTI 2.

It should be noted that the GC-PDCCH 1 carrying the DCI 1 and the GC-PDCCH 2 carrying the DCI 2 may be detected at different detection moments, or may have different detection periods. That is, different values may be configured for the detection periods because the GC-PDCCH 1 and the GC-PDCCH 2 correspond to different paired groups and are not related to each other. Conversely, UEs in a paired group or paired UEs need to be detected by using a set of detection periods because the UEs belong to a paired group and are related to each other.

In an alternative solution of FIG. 4, the first DCI obtained by the first UE may include only the first SFI, where the first SFI is the SFI of the first UE or the SFI of the group in which the first UE is, and the first SFI is used to indicate a slot format of a full-duplex transmission resource. In this case, the first indication information may be used to indicate only the location of the first SFI in the first DCI, and the first UE obtains the first SFI from the first DCI based on the first indication information, and can determine, based on the first SFI, to perform full-duplex communication.

For example, it is assumed that slots 2, 3, 4, 6, 7, and 8 are used for full-duplex transmission, UE 1 and UE 2 are paired UEs, the UE 1 performs downlink transmission in the slots 2, 3, 4, 6, 7, and 8, and the UE 2 performs uplink transmission in the slots 2, 3, 4, 6, 7, and 8. In this case, the first SFI is used to indicate that the UE 1 performs downlink transmission in the slots 2, 3, 4, 6, 7, and 8, and carries indication information used to indicate that these slots are used for full-duplex transmission, so that the UE 1 also learns that these slots are used for full-duplex transmission.

In the alternative solution, as described in the manner (1), the first indication information may include a correspondence between the first UE or the group in which the first UE is and the location of the first SFI in the first DCI; or as described in the manner (4), the first SFI is carried in an SFI field in the first DCI, and the SFI field further carries an identifier of the first UE or an identifier of the group in which the first UE is; and the first indication information includes the identifier of the first UE or the identifier of the group in which the first UE is. Specifically, for an implementation thereof, refer to the foregoing description, and details are not described again.

In still another alternative solution of FIG. 4, different SFIs are included in different pieces of DCI. For example, the first SFI in the solution shown in FIG. 4 may be included in DCI 1, and the second SFI in the solution shown in FIG. 4 may be included in DCI 2. Different pieces of DCI are scrambled by using different RNTIs. For example, the DCI 1 is scrambled by using an RNTI 1, and the DCI 2 is scrambled by using an RNTI 2. The first indication information may include the RNTI 1 and the RNTI 2, where the RNTI 1 is used to descramble the first SFI that is required by the first UE or the group in which the first UE is, and the RNTI 2 is used to descramble the second SFI that is required by the second UE or the group in which the second UE is. The first UE descrambles, based on the RNTI 1, the DCI 1 that includes the first SFI, and obtains the first SFI from the DCI 1, and descrambles, based on the RNTI 2, the DCI 2 that includes the second SFI, and obtains the second SFI from the DCI 2; and determines, based on the first SFI and the second SFI, to perform full-duplex communication.

In the solution shown in FIG. 4 or in the alternative solution of FIG. 4, an SFI included in each piece of DCI may correspond to not only UE or a group in which the UE is but also a carrier (or a cell (cell)) used by the UE or the group in which the UE is. This is not limited. When the SFI may also correspond to a carrier (or a cell (cell)) used by the UE or the group in which the UE is, the correspondence between UE or a group in which the UE is and an SFI included in DCI (group-to-SFI mapping or UE-to-SFI mapping) mentioned in the foregoing embodiment may be extended to a two-dimensional correspondence between UE (or a group in which the UE is) and both an SFI of the UE and a carrier (or a cell) used by the UE. In other words, the foregoing solution is group-to-SFI mapping or UE-to-SFI mapping, but when the SFI may also correspond to a carrier (or a cell (cell)) used by the UE or the group in which the UE is, group-cell-to-SFI mapping or UE-cell-to-SFI mapping is introduced. As shown in Table 2 below, an SFI 01 is an SFI of a group 0 on a carrier 0, an SFI 02 is an SFI of a group 1 on the carrier 0, an SFI 03 is an SFI of a group 2 on the carrier 0, an SFI 04 is an SFI of a group 3 on the carrier 0, an SFI 11 is an SFI of a group 0 on a carrier 1, and an SFI 12 is an SFI of a group 1 on the carrier 1.

**Table 2**

| SFI 01 | SFI 02 | SFI 03 | SFI 04 | SFI 11 | SFI 12 |
|---|---|---|---|---|---|
| Group 0 | Group 1 | Group 2 | Group 3 | Group 0 | Group 1 |
| Carrier 0 | | | | Carrier 1 | |

The foregoing describes the solutions provided in the embodiments of this application mainly from a perspective of interaction between nodes. It may be understood that to implement the foregoing functions, each node, for example, the first UE, includes a corresponding hardware structure and/or a software module that are/is used to perform the functions. A person of ordinary skill in the art should easily be aware that, in combination with the examples described in the embodiments disclosed in this specification, algorithms steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the first UE may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in this embodiment of this application, module division is an example, and is merely a logical function division. In actual implementation, another division manner may be used.

When each functional module is obtained through division based on each corresponding function, FIG. 5 is a schematic diagram of a possible composition of first UE. The first UE may be used to perform a function of the first UE in the foregoing embodiments. As shown in FIG. 5, the first UE may include an obtaining unit 50 and a determining unit 51.

In a possible design, the obtaining unit 50 is configured to: obtain first DCI that includes a first SFI and at least one second SFI, where the first SFI is an SFI of the first UE or an SFI of a group in which the first UE is, and the second SFI is an SFI of second UE paired with the first UE or an SFI of a group in which the second UE is; and obtain the first SFI and the at least one second SFI from the first DCI based on first indication information that is used to indicate a location of the first SFI in the first DCI and a location of the at least one second SFI in the first DCI. For example, the obtaining unit 50 supports the first UE in performing S401 and S402.

The determining unit 51 is configured to determine, based on the first SFI and the at least one second SFI that are obtained by the obtaining unit 50, to perform full-duplex communication. For example, the determining unit 51 supports the first UE in performing S403.

In still another possible design, the first DCI obtained by the obtaining unit 50 may include only the first SFI, where the first SFI is the SFI of the first UE or the SFI of the group in which the first UE is, and the first SFI is used to indicate a slot format of a full-duplex transmission resource. In this case, the first indication information may be used to indicate only the location of the first SFI in the first DCI. The determining unit 51 is configured to obtain the first SFI from the first DCI based on the first indication information, and the determining unit 51 can determine, based on the first SFI, to perform full-duplex communication.

In yet another possible design, different SFIs are included in different pieces of DCI. For example, the first SFI is included in DCI 1, and the second SFI is included in another piece of DCI (for example, DCI 2). The DCI 1 is scrambled by using an RNTI 1, the DCI 2 is scrambled by using an RNTI 2, and the first indication information includes the RNTI 1 and the RNTI 2, where the RNTI 1 is used to descramble the first SFI that is required by the first UE or the group in which the first UE is, and the RNTI 2 is used to descramble the second SFI that is required by the second UE or the group in which the second UE is. The obtaining unit 50 is configured to: descramble, based on the RNTI 1, the DCI 1 that includes the first SFI, and obtain the first SFI from the DCI 1, and descramble, based on the RNTI 2, the DCI 2 that includes the second SFI, and obtain the second SFI from the DCI 2. The determining unit 51 is configured to determine, based on the first SFI and the second SFI, to perform full-duplex communication.

It should be noted that all related content of the steps in the foregoing method embodiments may be cited as function descriptions of corresponding functional modules, and details are not described herein again. The first UE provided in this embodiment of this application is used to perform the foregoing slot format indication method, and therefore, can achieve a same effect as the foregoing slot format indication method.

When an integrated unit is used, an embodiment of this application provides a communications device. The apparatus exists in a product form of a chip, and is used to perform a function of the first UE in the foregoing embodiments. The apparatus may include a processing module and a communications module. The processing module is configured to control and manage an action of the apparatus. For example, the processing module is configured to support the apparatus in performing S401 to S403 and another procedure of the art described in this specification. The communications module is configured to support communication between the apparatus and another network entity, for example, communication between the apparatus and a functional module or a network entity shown in FIG. 2. The apparatus may further include a storage module, which is configured to store program code and data of the apparatus.

The processing module may be a processor or a controller. The processor may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The communications module may be a transceiver circuit, a communications interface, or the like. The storage module may be a memory. When the processing module is a processor, the communications module integrates a transmitter and a receiver. When the storage module is a memory, the apparatus in this embodiment of this application may be the device shown in FIG. 3.

The foregoing descriptions about implementations allow a person skilled in the art to understand that, for the purpose of convenient and brief description, division of the foregoing function modules is taken as an example for illustration. In actual application, the foregoing functions can be allocated to different modules and implemented according to a requirement, that is, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely exemplary. For example, the module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the prior art, or all or some of the technical solutions may be implemented in the form of a software product. The software product is stored in a storage medium and includes several instructions for instructing a device (which may be a single-chip microcomputer, a chip or the like) or a processor to perform all or some of the steps of the methods described in the embodiments of this application. The foregoing storage medium includes: any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A slot format indication method, wherein the method comprises:
obtaining, by first terminal UE, first downlink control information DCI, wherein the first DCI comprises a first slot format indication SFI and at least one second SFI, the first SFI is an SFI of the first UE or an SFI of a group in which the first UE is, and the second SFI is an SFI of second UE paired with the first UE or an SFI of a group in which the second UE is;
obtaining, by the first UE, the first SFI and the at least one second SFI from the first DCI based on first indication information, wherein the first indication information is used to indicate a location of the first SFI in the first DCI and a location of the at least one second SFI in the first DCI; and
determining, by the first UE based on the first SFI and the at least one second SFI, to perform full-duplex communication.

2. The method according to claim 1, wherein
the first indication information comprises a correspondence between UE and a location of an SFI of the UE in the first DCI, or a correspondence between a group in which UE is and a location of an SFI of the group in which the UE is in the first DCI.

3. The method according to claim 1 or 2, wherein
SFIs in the first DCI are arranged in descending or ascending order of numbers of groups in which UEs corresponding to the SFIs are.

4. The method according to claim 1, wherein
the first indication information comprises a first correspondence and a second correspondence; the first correspondence is a correspondence between the first UE or the group in which the first UE is and the location of the first SFI in the first DCI; and
the second correspondence is a correspondence between the location of the first SFI in the first DCI and the location of the at least one second SFI in the first DCI, or a correspondence between the first UE and the location of the at least one second SFI in the first DCI.

5. The method according to claim 4, wherein
the first SFI is located in an odd-numbered position, and the at least one second SFI is located in an even-numbered position; or
the first SFI is located at an even-numbered position, and the at least one second SFI is located at an odd-numbered position.

6. The method according to claim 1, wherein an SFI comprised in the first DCI is carried in an SFI field in the first DCI correspondingly, and the SFI field further carries an identifier of UE corresponding to the SFI or an identifier of a group in which the UE corresponding to the SFI is; and
when the SFI field carries the identifier of the UE corresponding to the SFI, the first indication information comprises an identifier of the first UE and an identifier of the second UE; or
when the SFI field carries the identifier of the group in which the UE corresponding to the SFI is, the first indication information comprises an identifier of the group in which the first UE is and an identifier of the group in which the second UE is.

7. The method according to claim 1, wherein the first indication information comprises a correspondence between the first UE or the group in which the first UE is and the location of the first SFI in the first DCI;
the obtaining, by the first UE, the first SFI and the at least one second SFI from the first DCI based on first indication information is specifically: obtaining, by the first UE, the first SFI based on the correspondence, and using an SFI other than the first SFI in the first DCI as the at least one second SFI.

8. The method according to any one of claims 1 to 7, wherein the obtaining, by first UE, first DCI comprises:
parsing, by the first UE based on a radio network temporary identifier RNTI of the first UE, at least one piece of DCI delivered by an access network device, and using successfully parsed DCI as the first DCI, wherein at least one DCI comprises the first DCI.

9. The method according to any one of claims 1 to 8, wherein
an SFI comprised in the first DCI corresponds to a carrier of UE corresponding to the SFI, or corresponds to a carrier of a group in which the UE corresponding to the SFI is.

10. The method according to any one of claims 1 to 9, wherein
the first indication information is delivered to the first UE by an access network device, or is pre-configured on the first UE.

11. The method according to claim 10, wherein
the first indication information is carried in any one of radio resource control RRC signaling, media access control MAC layer signaling, or physical layer signaling, and delivered to the first UE.

12. First terminal UE, wherein the first UE comprises:
an obtaining unit, configured to obtain first downlink control information DCI, wherein the first DCI comprises a first slot format indication SFI and at least one second SFI, the first SFI is an SFI of the first UE or an SFI of a group in which the first UE is, and the second SFI is an SFI of second UE paired with the first UE or an SFI of a group in which the second UE is; and
obtain the first SFI and the at least one second SFI from the first DCI based on first indication information, wherein the first indication information is used to indicate a location of the first SFI in the first DCI and a location of the at least one second SFI in the first DCI; and
a determining unit, configured to determine, based on the first SFI and the at least one second SFI that are obtained by the obtaining unit, to perform full-duplex communication.

13. The first UE according to claim 12, wherein
the first indication information comprises a correspondence between UE and a location of an SFI of the UE in the first DCI, or a correspondence between a group in which UE is and a location of an SFI of the group in which the UE is in the first DCI.

14. The first UE according to claim 12 or 13, wherein
SFIs in the first DCI are arranged in descending or ascending order of numbers of groups in which UEs corresponding to the SFIs are.

15. The first UE according to claim 12, wherein
the first indication information comprises a first correspondence and a second correspondence; the first correspondence is a correspondence between the first UE or the group in which the first UE is and the location of the first SFI in the first DCI; and
the second correspondence is a correspondence between the location of the first SFI in the first DCI and the location of the at least one second SFI in the first DCI, or a correspondence between the first UE and the location of the at least one second SFI in the first DCI.

16. The first UE according to claim 15, wherein
the first SFI is located in an odd-numbered position, and the at least one second SFI is located in an even-numbered position; or
the first SFI is located at an even-numbered position, and the at least one second SFI is located at an odd-numbered position.

17. The first UE according to claim 12, wherein an SFI comprised in the first DCI is carried in an SFI field in the first DCI correspondingly, and the SFI field further carries an identifier of UE corresponding to the SFI or an identifier of a group in which the UE corresponding to the SFI is; and
when the SFI field carries the identifier of the UE corresponding to the SFI, the first indication information comprises an identifier of the first UE and an identifier of the second UE; or
when the SFI field carries the identifier of the group in which the UE corresponding to the SFI is, the first indication information comprises an identifier of the group in which the first UE is and an identifier of the group in which the second UE is.

18. The first UE according to claim 12, wherein the first indication information comprises a correspondence between the first UE or the group in which the first UE is and the location of the first SFI in the first DCI;
the obtaining unit is specifically configured to obtain the first SFI based on the correspondence and use an SFI other than the first SFI in the first DCI as the at least one second SFI.

19. The first UE according to any one of claims 12 to 18, wherein
the obtaining unit is specifically configured to parse, based on a radio network temporary identifier RNTI of the first UE, at least one piece of DCI delivered by an access network device, and using successfully parsed DCI as the first DCI, wherein at least one DCI comprises the first DCI.

20. The first UE according to any one of claims 12 to 19, wherein
an SFI comprised in the first DCI corresponds to a carrier of UE corresponding to the SFI, or corresponds to a carrier of a group in which the UE corresponding to the SFI is.

21. The first UE according to any one of claims 12 to 20, wherein
the first indication information is delivered to the first UE by an access network device, or is pre-configured on the first UE.

22. The first UE according to claim 21, wherein
the first indication information is carried in any one of radio resource control RRC signaling, media access control MAC layer signaling, or physical layer signaling, and delivered to the first UE.

23. A communications device, comprising at least one processor and a memory, wherein
the memory is configured to store a computer program, so that when the computer program is executed by the at least one processor, the slot format indication method according to any one of claims 1 to 11 is implemented.

24. A computer storage medium, storing a computer program, wherein when executed by a processor, the program is enabled to implement the slot format indication method according to any one of claims 1 to 11.
